# EUROPEAN PATENT SPECIFICATION

(11) **EP 4 346 364 B1**
(45) Date of publication and mention of the grant of the patent: **15.10.2025**
(21) Application number: 22731814.4
(22) Date of filing: 27.05.2022
(51) Int. Cl.: A01B 39/18, A01M 21/04

(54) **EQUIPMENT FOR WEEDING SOILS**
VORRICHTUNG ZUM JÄTEN VON BÖDEN
ÉQUIPEMENT POUR LE DÉSHERBAGE DE SOLS

(30) Priority: 31.05.2021 IT 202100014237
(43) Date of publication of application: 10.04.2024
(73) Proprietor: Free Ground S.r.l., 33040 Pradamano (UD) (IT)
(72) Inventor: BERNABEI, Luca, 33040 Pradamano (UD) (IT); ERMACORA, Demis, 33040 Pradamano (UD) (IT); GIORGIUTTI, Piergiorgio, 33040 Pradamano (UD) (IT); SCILIPOTI, Salvatore, 33040 Pradamano (UD) (IT)
(74) Representative: Petraz, Gilberto Luigi
(86) International application number: PCT/IB2022/055020
(87) International publication number: WO 2022/254302

(56) References cited:
- WO-A1-2018/112531
- WO-A1-2020/121155
- CN-Y- 2 607 781
- US-A- 4 092 800
- US-A1- 2003 215 354

## Description

### Technical Field

The present invention relates to a piece of equipment for weeding soils.

### Background Art

To date, particularly in the agricultural sector, there is a well-known need for weed control, which is an activity allowing to eliminate elements that are harmful to crops, such as e.g. weeds and/or fungal pathogens or other elements.

In particular, such harmful elements can grow in fields intended for agricultural activities, such as vineyards or orchards or fields for planting, affecting the development of any cultivated plants.

However, the activity of weeding can also be carried out in other contexts such as, e.g., during maintenance activities of green areas, such as public parks or gardens.

To date, it is very common practice to perform weeding of soils using chemicals, i.e., herbicides, which are brought into contact with the harmful elements to be removed and which, usually, contain active ingredients called glyphosates.

Weed control performed with the use of chemicals, however, has some drawbacks that are partly attributable to the environmental issues that can be derived from them.

Specifically, chemicals used during weed control activities can make contact with cultivated plants, damaging their quality and/or they can permeate into the soil and pollute it and/or can release environmentally harmful gases and vapors into the air.

Additionally, it is worth noting that to date, very restrictive environmental constraints are imposed on agricultural producers and even groundskeepers, and therefore, the use of chemical weed control products does not fit well with these restrictions.

Again, the use of chemicals exposes operators handling them to get into direct contact with substances that can be harmful to their health.

Additionally, weeding can also be carried out through the use of heat produced by a flame oriented, through appropriate nozzles, directly on the harmful elements to be eliminated.

The fuel usually used to generate the flame is LPG, appropriately stored in cylinders which are transported to the site by the operators by appropriate means, such as e.g. tractors.

This practice is usually known as flame weeding and is based on the heat shock caused to weeds and/or fungal pathogens by the rapid passage of the flame.

Specifically, during the passage of the flame, there is a rapid rise in the tissue temperature of the elements to be eliminated, which causes the destruction of the cell membranes, resulting in the death of the weeds within a few days.

Flame weeding, however, has some drawbacks that are partly attributable to the long implementation timeframes that negatively affect the cost of managing the weeding activity.

Again, the combustion process employed in flame weeding activities often results in the production of pollutants, such as e.g. carbon dioxide or particulate matter, which can cause environmental pollution.

An additional drawback related to flame weeding is that this technique cannot be used to eradicate all kinds of weeds, as many species of weeds and/or fungal pathogens are resistant to heat.

Additionally, flame weeding acts mainly on the surface and therefore its effect is short-lived; in fact, it may happen that in a short time both weeds and fungal pathogens are reborn, thus increasing the frequency with which to perform weed control.

Another drawback resulting from flame weeding is determined by the fact that the open flames may inadvertently contact the surrounding vegetation and thus promote the development of fires, especially if the vegetation is dry.

An additional technique employed during weeding of soils involves the use of electromagnetic waves, particularly microwaves, which are delivered to the same weeds to be eliminated, thus resulting in their intracellular heating.

Specifically, water, fats and carbohydrates constituting the plant cells of weeds and fungal pathogens, through a process known as dielectric heating, absorb energy from the microwaves which contact them.

In this way, the outer membrane of the weed cells tears and comes to death in a short time, leading to the consequent death of the harmful elements.

Performing weed control activities through the use of microwaves, however, has some drawbacks that are partly attributable to the long timeframe of use.

In this regard, it should be pointed out that it is necessary for microwaves to contact the elements to be eliminated for a long time in order to achieve a satisfactory degree of elimination of the harmful elements themselves.

US 4,092,800 discloses an apparatus for carrying out a method of vegetation control comprising transmitters configured to generate electromagnetic waves to be applied to a selected area.

### Description of the Invention

The main aim of the present invention is to devise a piece of equipment for weeding soils which allows speeding up the weeding activity thus decreasing the operating costs of the weeding activity.

Another object of the present invention is to devise a piece of equipment for weeding soils which allows reducing the environmental impact of the weeding activity.

Still, another object of the present invention is to devise a piece of equipment for weeding soils which allows limiting the health risk to the operators employed in the weeding activity itself.

Another object of the present invention is to devise a piece of equipment for weeding soils which is effective on a greater number of weed species while decreasing the frequency with which weed control should be carried out.

Another object of the present invention is to devise a piece of equipment for weeding soils that can overcome the aforementioned drawbacks of the prior art within the framework of a simple, rational, easy-to-use and cost-effective solution.

The above objects are achieved by this piece of equipment for weeding soils having the features of claim 1.

### Brief Description of the Drawings

Other characteristics and advantages of the present invention will become more apparent from the description of a preferred, but not exclusive, embodiment of a piece of equipment for weeding soils, illustrated by way of an indicative, yet non-limiting example, in the accompanying tables of drawings wherein:
Figure 1 is an axonometric view of a piece of equipment according to the invention in a phase of use;
Figure 2 is an axonometric view of a piece of equipment according to the invention in a different phase of use;

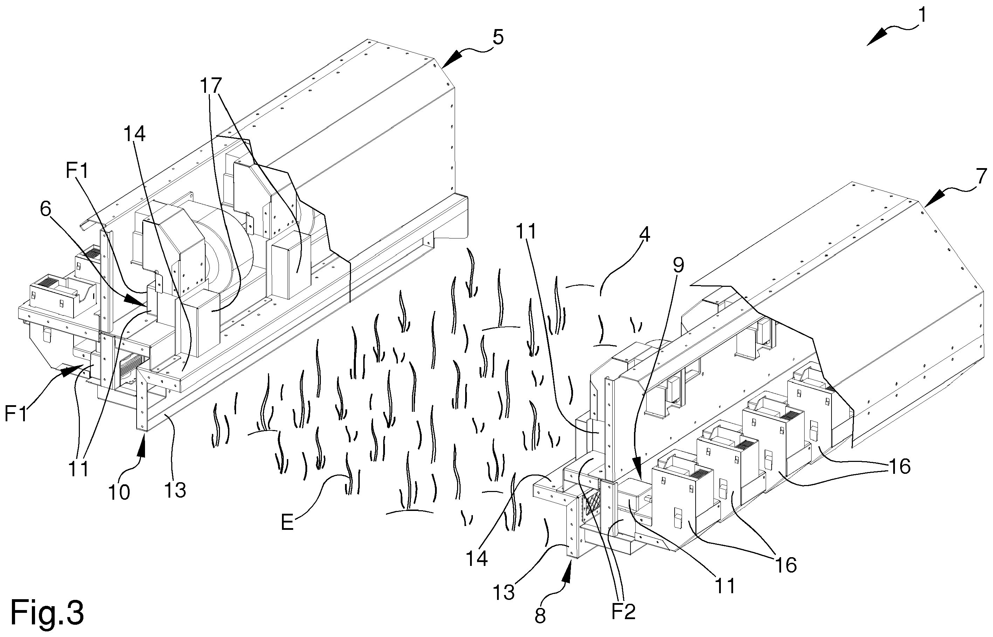

Figure 3 is an axonometric, partially cutaway view of some components of the equipment according to the invention;

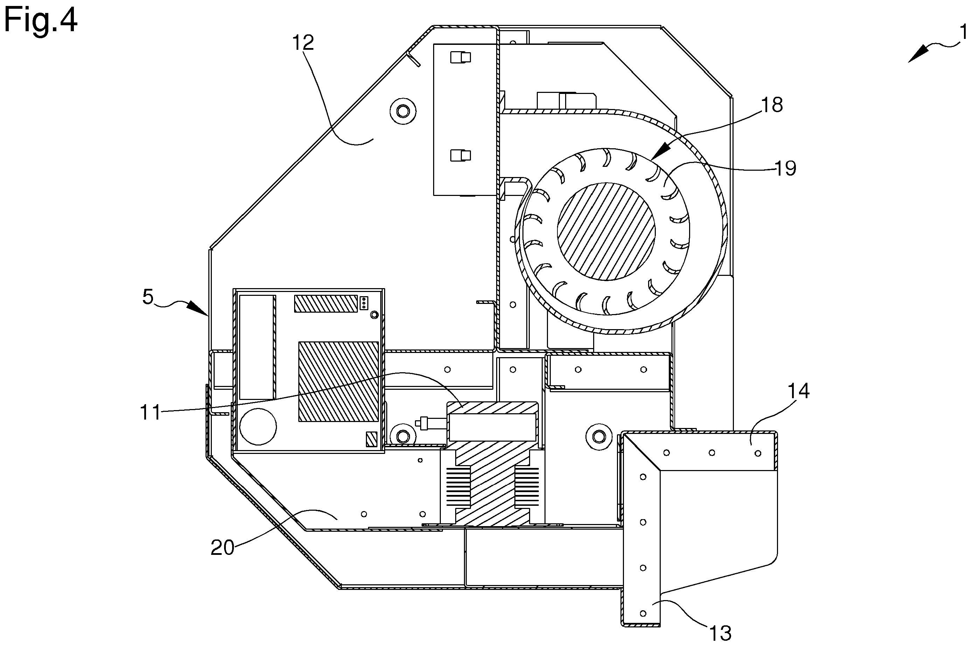

Figure 4 is a sectional view of some components of the equipment according to the invention;

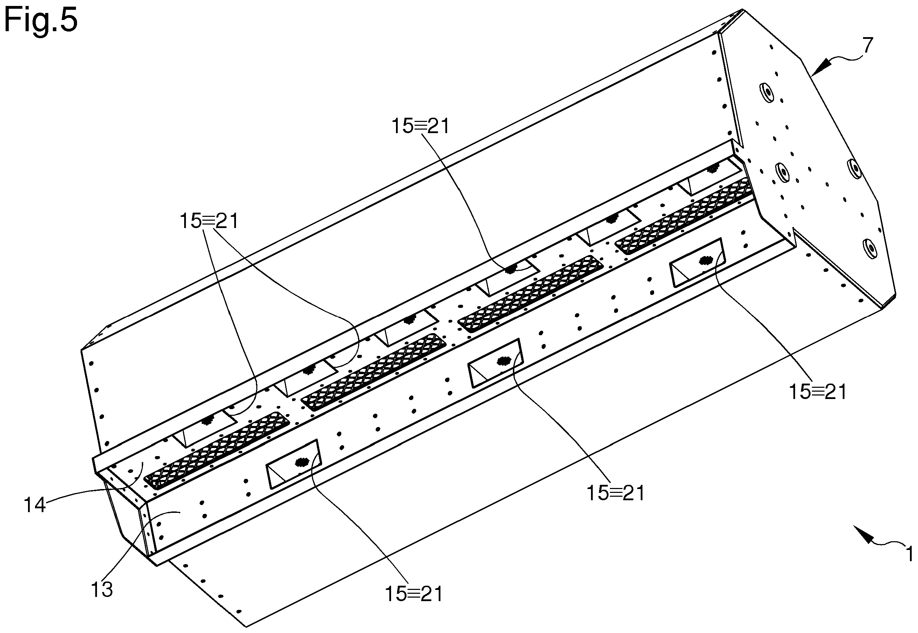

Figure 5 is a view from below of some components of the equipment according to the invention.

### Embodiments of the Invention

With particular reference to these figures, reference numeral 1 globally indicates a piece of equipment for weeding soils.

Within the scope of this disclosure, it was considered that the equipment 1 is used to remove at least one weeding agent E from a plot to be weeded.

Particularly, it was assumed that the weeding agent E is of the type of weeds that grow near a fruit tree that is, e.g., a vine plant.

However, alternative uses of the equipment 1 cannot be ruled out wherein, for example, the weeding agent E is of a different type and, for example, is of the type of a fungal pathogen.

Additionally, alternative uses of the equipment 1 are provided wherein it is used to weed agricultural soils of a different nature such as, e.g., seeded fields or to weed land of a non-agricultural nature such as, e.g., gardens or public parks.

The piece of equipment 1 comprises:
- at least one supporting frame 2;
- at least one radiation assembly 3 associated with the supporting frame 2, adapted to generate microwaves and to convey them towards a radiation area 4.

During the use of the piece of equipment 1, as will be explained in detail below, it is planned to place the piece of equipment 1 on the ground to be weeded so that the weeding agent E is located at the radiation area 4.

In this way, once the equipment 1 is activated, the weeding agent E is hit by the microwaves generated by the radiation assembly 3 and is destroyed in a short time due to the exposure to an electromagnetic field that results in its cellular deterioration.

Precisely, microwaves cause the intracellular heating in the weeding agent E, and specifically water, fats and carbohydrates constituting the plant cells of the weeding agent E, through a process known as dielectric heating, absorb microwave energy.

Consequently, the outer membrane of the cells of the weeding agent E tears and leads the weeding agent E to death in a short time.

According to the invention, the radiation assembly 3 comprises:
- at least a first unit of work 5 provided with first emission means 6 adapted to emit the microwaves; and
- at least a second unit of work 7 provided with first reflection means 8 adapted to reflect the microwaves emitted by the first emission means 6 towards the radiation area 4.

The first and the second units of work 5, 7 are substantially opposite each other with respect to the radiation area 4.

The microwaves generated by the first emission means 6 pass through the radiation area 4 at least twice, namely, at least once when emitted by the first emission means 6 and at least a second time when reflected by the first reflection means 8.

In this way, microwaves contact the weeding agent E multiple times, thus increasing the destructive power of the equipment 1 and reducing the processing times for the same amount of electromagnetic energy generated.

The second unit of work 7 comprises second emission means 9 of the microwaves and the first unit of work 5 comprises second reflection means 10 adapted to reflect the microwaves emitted by the second emission means 9 towards the radiation area 4.

In this way, the microwaves emitted by the first emission means 6 are reflected by the first reflection means 8, being oriented towards the first unit of work 5 where they contact the second reflection means 10, which deflect them towards the second unit of work 7, where they contact the first reflection means 8 again.

Likewise, the microwaves emitted by the second emission means 9 are reflected by the second reflection means 10, being oriented towards the second unit of work 7 where they contact the first reflection means 8, which deflect them towards the first unit of work 5, where they contact the second reflection means 10 again.

The aforementioned bouncing of the microwaves generated by the first and by the second emission means 6, 9 is perpetuated until the energy carried by the microwaves themselves is exhausted.

Particularly, whenever microwaves pass through the radiation area 4, being bounced between the first and the second reflection means 8, 10, they contact the weeding agent E and deteriorate it.

It is easy to appreciate how at the radiation area 4 a microwave reverberation area is created, which facilitates and speeds up the elimination of the weeding agent E.

Advantageously, each of the first and of the second emission means 6, 9 comprises at least one emitting device 11 of the microwaves.

Usefully, the first and the second emission means 6, 9 comprise a plurality of emitting devices 11.

The presence of a plurality of emitting devices 11, suitably arranged, allows generating an electromagnetic field of much greater intensity than in the case where only one emitting device 11 is present, thereby achieving greater destructive power of the harmful elements on the soil to be weeded.

In the particular embodiment shown in the figures, the emitting devices 11 are of the magnetron type.

For example, magnetrons generate microwaves at a frequency of 2.450 MHz.

Alternative embodiments of the equipment 1 cannot however be ruled out, wherein the emitting devices 11 are magnetrons adapted to generate microwaves at a different frequency.

Preferably, the emitting devices 11 of the first unit of work 5 are arranged along at least a first row F1 and the emitting devices 11 of the second unit of work 7 are arranged along at least a second row F2.

The first row F1 and the second row F2 are substantially parallel and opposite with respect to the radiation area 4.

In the particular embodiment shown in the figures, the emitting devices 11 of the first unit of work 5 are arranged along two substantially parallel first rows F1.

For example, one of the first rows F1 is positioned, in use, above the other of the first rows F1.

Likewise, the emitting devices 11 of the second unit of work 7 are arranged along two substantially parallel second rows F2.

For example, one of the second rows F2 is positioned, in use, above the other of the second rows F2.

Advantageously, each of the first unit of work 5 and the second unit of work 7 comprises a housing compartment 12 of the emitting devices 11.

The housing compartment 12 is adapted to protect the emitting devices 11 from any external weather and friction with vegetation on the land to be weeded or other external interference.

Conveniently, each of the first reflection means 8 and of the second reflection means 10 comprise a first reflection wall 13 adapted to reflect the microwaves towards the radiation area 4.

Preferably, the first reflection walls 13 are substantially parallel and mutually facing each other to delimit, at least partly, the radiation area 4.

Precisely, the equipment 1, during its use, is positioned on the soil to be weeded in such a way that the first reflection walls 13 are arranged substantially vertically and located on the opposite side with respect to the weeding agent E. With particular reference to the embodiment shown in the figures, each of the first reflection means 8 and of the second reflection means 10 comprise at least a second reflection wall 14 positioned, in use, above the radiation area 4 and substantially perpendicular to the first reflection walls 13.

Precisely, the second reflection wall 14 of the first unit of work 5 is substantially adjacent and perpendicular to the first reflection wall 13 of the first unit of work 5.

Likewise, the second reflection wall 14 of the second unit of work 7 is substantially adjacent and perpendicular to the first reflection wall 13 of the second unit of work 7.

The radiation area 4 thus turns out to be delimited above, at least partly, by the second reflection walls 14.

In this way, it is possible to intercept and reflect the microwaves emitted by the first reflection means 8 and by the second emission means 9 expanding in every direction of space, maximizing the reverberation effect found in the radiation area 4.

Conveniently, the first reflection walls 13 are provided with at least one exit opening 15 of the microwaves, facing the radiation area 4 and adapted to allow the movement of the microwaves from the housing compartments 12 to the radiation area 4.

Specifically, the first reflection wall 13 of the first unit of work 5 is adapted to reflect the microwaves produced by the second emission means 9 and to allow the passage of the microwaves generated by the first emission means 6 towards the radiation area 4.

Likewise, the first reflection wall 13 of the second unit of work 7 is adapted to reflect the microwaves produced by the first emission means 6 and to allow the passage of the microwaves generated by the second emission means 9 towards the radiation area 4.

Advantageously, the second reflection walls 14 are provided with at least one relevant exit opening 15 of the microwaves, facing the radiation area 4 and adapted to allow the microwaves to move from the housing compartment 12 to the radiation area 4.

With particular reference to the embodiment shown in the figures, the microwaves emitted by the emitting devices 11 belonging to the first row Fl, positioned above the other first row Fl, and to the second row F2, positioned above the other second row F2, escape from the housing compartments 12 through the exit openings 15 made on the second reflection walls 14.

The microwaves emitted by the emitting devices 11 belonging to the first row Fl, positioned below the other first row Fl, and to the second row F2, positioned below the other second row F2, escape from the housing compartments 12 through the exit openings 15 made on the first reflection walls 13.

Advantageously, the first unit of work 5 and the second unit of work 7 comprise conveying means 16 of the microwaves positioned between the emitting devices 11 and the first reflection walls 13 and adapted to convey the microwaves towards the exit opening 15.

Preferably, the conveying means 16 comprise a plurality of conveying ducts wherein each conveying duct is associated with a relevant emitting device 11.

Again, the first reflection walls 13 are provided with a plurality of exit openings 15 wherein each exit opening 15 is associated with a relevant conveying duct.

With particular reference to the embodiment shown in the figures, the first unit of work 5 and the second unit of work 7 comprise auxiliary conveying means 17 of the microwaves positioned between the emitting devices 11 and the second reflection walls 14 and adapted to convey the microwaves towards the exit openings 15 formed on the second reflection walls 14.

Preferably, the auxiliary conveying means 17 comprise a plurality of auxiliary conveying ducts wherein each auxiliary conveying duct is associated with a relevant emitting device 11.

Again, the second reflection walls 14 are provided with a plurality of exit openings 15 wherein each exit opening 15 is associated with a relevant auxiliary conveying duct.

Conveniently, each of the first unit of work 5 and of the second unit of work 7 comprises a heating assembly 18 of the radiation area 4 adapted to convey at least one flow of hot air towards the radiation area 4.

The flow of hot air is adapted to heat the radiation area 4.

The special solution of heating the radiation area 4 allows the weeding power of the equipment 1 to be increased because the weeding agent E is subjected, simultaneously, to the electromagnetic field generated by the microwaves and the flow of hot air conveyed towards the radiation area 4.

Specifically, the flow of hot air results in a temperature rise in the tissues of the weeding agent E, which causes rapid deterioration of the tissues of the weeding agent E itself.

Advantageously, the heating assembly 18 comprises:
- generation means 19, 20 of the flow of hot air;
- directional means 21 adapted to convey the flow of hot air from the generation means 19, 20 towards the radiation area 4.

Preferably, the generation means 19, 20 comprise:
- at least one ventilation device 19 adapted to move at least one flow of air;
- fitting means 20 adapted to convey the flow of air from the ventilation device 19 to the emitting devices 11.

The flow of air is adapted to cool the emitting devices 11 by heat exchange and to heat up, thus generating the flow of hot air.

In this regard, it should be specified that the emitting devices 11 and the relevant operating electronic boards need to be cooled constantly in order to function at their best and for a long time.

In fact, the microwave generation process results in the production of large amounts of heat which accumulate inside the housing compartments 12.

The special expedient of employing the cooling air of the emitting devices 11 to heat the radiation area 4 makes it possible to limit the energy consumption of the equipment 1.

Preferably, the equipment 1 comprises a plurality of ventilation devices 19.

With particular reference to the embodiment shown in the figures, the ventilation devices 19 are of the type of a fan and are placed inside the housing compartments 12.

Particularly, the ventilation devices 19 take air from the outside of the equipment 1 and move it inside the housing compartments 12, where it is collected inside the fitting means 20 that convey it onto the emitting devices 11. Preferably, the fitting means 20 comprise a plurality of fitting channels positioned between the ventilation devices 19 and the emitting devices 11.

The air entering the interior of the housing compartments 12 is oriented onto the emitting devices 11 and onto the relevant operating electronic boards allowing them to cool and generating the flow of hot air that is then conveyed towards the radiation area 4 through the directional means 21.

Preferably, the directional means 21 comprise a plurality of exit holes of the flow of hot air formed on the first reflection walls 13 and on the second reflection walls 14.

With special reference to the embodiment shown in the figures, the exit holes coincide with the exit openings 15.

Conveniently, the generation means 19, 20 comprise filtering means associated with the ventilation devices 19 and adapted to filter the flow of air entering the ventilation devices 19.

The filtering means retain any impurities in the air outside the equipment 1 that may damage the ventilation devices 19 and/or the emitting devices 11.

Particularly, the air may contain fine dust and/or pollutants that can damage the components of the equipment 1 contacted by the same air.

Preferably, the supporting frame 2 comprises distance adjustment means 22 adapted to adjust the distance between the first unit of work 5 and the second unit of work 7.

The supporting frame 2 comprises a first upright element 23, with which the first unit of work 5 is associated, a second upright element 24, with which the second unit of work 7 is associated, and a transverse element 25 positioned, in use, above the upright elements 23, 24.

Particularly, the upright elements 23, 24 are associated with the transverse element 25 in a sliding manner along a sliding axis substantially parallel to the transverse element 25.

The distance adjustment means 22 move the upright elements 23, 24 by shifting along the relevant sliding axis with respect to the transverse element 25 and are adapted to bring the first unit of work 5 and the second unit of work 7 close to and/or away from each other, thus adjusting their distance from each other.

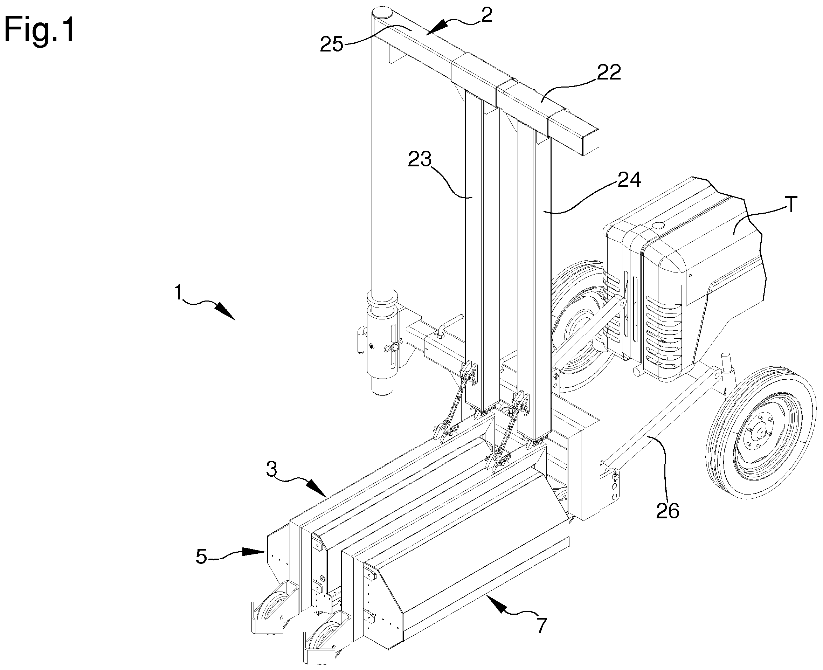

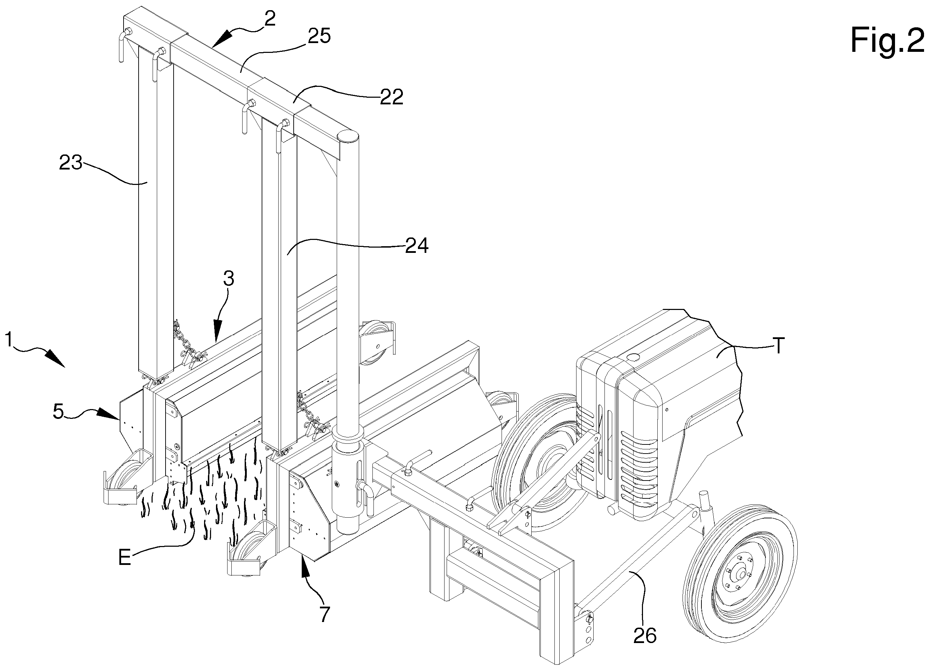

Particularly, the distance adjustment means 22 are adapted to position the first and the second units of work 5, 7 in at least one maximum approaching configuration, shown in Figure 1, and in at least one maximum away configuration, shown in Figure 2.

For example, it may be useful to place the first and the second units of work 5, 7 in the maximum away configuration when the equipment 1 is moved close to a weeding agent E, so that it is possible to place the first unit of work 5 and the second unit of work 7 in opposite positions with respect to the weeding agent E. Again, it may be useful to place the first and second units of work 5, 7 in the maximum approaching configuration when the piece of equipment 1 is moved onto the land to be weeded, so as to reduce the relevant overall dimensions.

Conveniently, the distance adjustment means 22 are adapted to position the first and the second units of work 5, 7 in a plurality of intermediate configurations between the maximum away configuration and the maximum approaching configuration, so as to adjust the distance between the first unit of work 5 and the second unit of work 7 according to, e.g., the size of the weeding agent E.

Usefully, the supporting frame 2 comprises fastening means 26 adapted to associate with towing means T of the equipment 1.

The towing means T are adapted to move the equipment 1 onto the ground.

Alternative embodiments of the equipment 1 cannot however be ruled out wherein the movement of the equipment 1 is implemented manually by an operator or wherein the equipment 1 is provided with relevant means of setting m motion.

With particular reference to the embodiment shown in the figures, the towing means T are of the type of an agricultural vehicle, that is, a tractor.

The operation of the equipment 1 according to the invention is substantially as follows.

The equipment 1 is moved over the soil to be weeded and is placed in the proximity of the weeding agent E.

Then, the first unit of work 5 and the second unit of work 7 are placed in the maximum away configuration by activating the distance adjustment means 22.

Next, the equipment 1 is further moved close to the weeding agent E so that the weeding agent E is inside the radiation area 4, that is, between the first unit of work 5 and the second unit of work 7.

Then, the first unit of work 5 and the second unit of work 7 are mutually moved close to each other by activating the distance adjustment means 22 so that the first reflection walls 13 are to be located adjacent to the weeding agent E.

At this point, the first emission means 6 and the second emission means 9 are activated, which means generate the microwaves that contact the weeding agent E either directly or as a result of the relevant reflection enacted by the first reflection means 8 and by the second reflection means 10.

At the same time, the heating assemblies 18 that convey hot air towards the radiation area 4 are activated, thus improving the weeding power of the equipment 1.

It has in practice been ascertained that the described invention achieves the intended objects.

The fact is particularly emphasized that the soil-weeding equipment makes it possible to significantly speed up soil-weeding activities.

In fact, the presence of the reflection means, the electromagnetic field generated by the microwave emitting means being the same, makes it possible to limit microwave scattering and increase the exposure time of the weeding agents to the microwaves themselves.

In addition, the invention allows greatly reducing the environmental impact of the weed control activity because no harmful pollutants accumulate in the soil while, at the same time, reducing the exposure of the operators to harmful agents to health.

Additionally, the use of microwaves allows reducing the frequency of weed control because microwaves also contact the deeper layers of soil, thus slowing the re-growth of weeds and fungal pathogens.

Still microwaves manage to destroy harmful elements belonging to species of very different natures, allowing the equipment to be used according to the invention in very different environments.

## Claims

1. Equipment (1) for weeding soils comprising:
- at least one supporting frame (2);
- at least one radiation assembly (3) associated with said supporting frame (2), adapted to generate microwaves and to convey them towards a radiation area (4);
wherein said radiation assembly (3) comprises:
- at least a first unit of work (5) provided with first emission means (6) adapted to emit said microwaves; and
- at least one second unit of work (7) provided with first reflection means (8) adapted to reflect said microwaves emitted by said first emission means (6) towards said radiation area (4); and
wherein said first and second units of work (5, 7) are substantially opposite each other with respect to said radiation area (4), **characterized by** the fact that said second unit of work (7) comprises second emission means (9) of said microwaves and by the fact that said first unit of work (5) comprises second reflection means (10) adapted to reflect said microwaves emitted by said second emission means (9) towards said radiation area (4).

2. Equipment (1) according to claim 1, **characterized by** the fact that each of said first and second emission means (6, 9) comprises at least one emitting device (11) of said microwaves.

3. Equipment (1) according to one or more of the preceding claims, **characterized by** the fact that said first and second emission means (6, 9) comprise a plurality of said emitting devices (11).

4. Equipment (1) according to one or more of the preceding claims, **characterized by** the fact that said emitting devices (11) of said first unit of work (5) are arranged along at least a first row (Fl) and by the fact that said emitting devices (11) of said second unit of work (7) are arranged along at least a second row (F2), said first row (Fl) and said second row (F2) being substantially parallel and opposite with respect to said radiation area (4).

5. Equipment (1) according to one or more of the preceding claims, **characterized by** the fact that each of said first unit of work (5) and said second unit of work (7) comprises a housing compartment (12) of said emitting devices (11).

6. Equipment (1) according to one or more of the preceding claims, **characterized by** the fact that each of said first reflection means (8) and said second reflection means (10) comprises a first reflection wall (13) adapted to reflect said microwaves towards said radiation area (4).

7. Equipment (1) according to claim 6, **characterized by** the fact that said first reflection walls (13) are substantially parallel and mutually facing each other to delimit, at least partly, said radiation
area (4).

8. Equipment (1) according to one or more of the preceding claims 6 or 7, **characterized by** the fact that each of said first reflection means (8) and said second reflection means (10) comprises at least a second reflection wall (14) positioned, in use, above said radiation area (4) and substantially perpendicular to said first reflection walls (13).

9. Equipment (1) according to one or more of the preceding claims 6 to 8, **characterized by** the fact that said first reflection walls (13) are provided with at least one exit opening (15) of said microwaves, facing said radiation area (4) and adapted to allow the movement of said microwaves from said housing compartments (12) to said radiation area (4).

10. Equipment (1) according to one or more of the preceding claims 6 to 9, **characterized by** the fact that said first unit of work (5) and said second unit of work (7) comprise conveying means (16) of said microwaves positioned between said emitting devices (11) and said first reflection walls (13) and adapted to convey said microwaves towards said exit opening (15).

11. Equipment (1) according to one or more of the preceding claims, **characterized by** the fact that each of said first unit of work (5) and said second unit of work (7) comprises a heating assembly (18) of said radiation area (4) adapted to convey at least one flow of hot air towards said radiation area (4), said flow of hot air being adapted to heat said radiation area (4).

12. Equipment (1) according to claim 11, **characterized by** the fact that said heating assembly (18) comprises:
- generation means (19, 20) of said flow of hot air;
- directional means (21) adapted to convey said flow of hot air from said generation means (19, 20) towards said radiation area (4).

13. Equipment (1) according to claim 12, **characterized by** the fact that said generation means (19, 20) comprise:
- at least one ventilation device (19) adapted to move at least one flow of air;
- fitting means (20) adapted to convey said flow of air from said ventilation device to said emitting devices (11);
wherein said flow of air is adapted to cool said emitting devices (11) by heat exchange and to heat, thus generating said flow of hot air.

14. Equipment (1) according to one or more of the preceding claims 12 or 13, **characterized by** the fact that said generation means (19, 20) comprise filtering means associated with said ventilation device (19) and adapted to filter said flow of air entering said ventilation device (19).

15. Equipment (1) according to one or more of the preceding claims, **characterized by** the fact that said supporting frame (2) comprises distance adjustment means (22) adapted to adjust the distance between said first unit of work (5) and said second unit of work (7).

16. Equipment (1) according to one or more of the preceding claims, **characterized by** the fact that said supporting frame (2) comprises fastening means (26) adapted to associate with towing means (T) of said equipment (1).

## Patentansprüche

1. Gerät zur Unkrautbeseitigung aus Böden (1) mit:
- mindestens einem Stützrahmen (2);
- mindestens einer mit dem Stützrahmen (2) verbundenen Strahlungsbaugruppe (3), die dazu angepasst ist, Mikrowellen zu generieren und diese in Richtung eines Strahlungsbereichs (4) zu führen;
wobei die Strahlungsbaugruppe (3) aufweist
- mindestens eine erste Arbeitseinheit (5), die mit ersten Emissionsmitteln (6) versehen ist, die dazu angepasst sind, Mikrowellen zu emittieren; und
- mindestens eine zweite Arbeitseinheit (7), die mit ersten Reflexionsmitteln (8) versehen ist, die dazu angepasst sind, die von den ersten Emissionsmitteln (6) emittierten Mikrowellen zu dem Strahlungsbereich (4) zu reflektieren; und
wobei die ersten und zweiten Arbeitseinheiten (5, 7) im Wesentlichen zueinander entgegengesetzt in Bezug auf den Strahlungsbereich (4) sind, **dadurch gekennzeichnet, dass** die zweite Arbeitseinheit (7) zweite Emissionsmittel (9) der Mikrowellen aufweist und dadurch, dass die erste Arbeitseinheit (5) zweite Reflexionsmittel (10) aufweist, die dazu angepasst sind, die von den zweiten Emissionsmitteln (9) emittierten Mikrowellen zu dem Strahlungsbereich (4) zu reflektieren.

2. Gerät (1) nach Anspruch 1, **dadurch gekennzeichnet, dass** sowohl die ersten als auch die zweiten Emissionsmittel (6, 9) mindestens ein Strahlungsgerät (11) der Mikrowellen aufweisen.

3. Gerät (1) nach einem oder mehreren der vorhergehenden Ansprüche,
**dadurch gekennzeichnet, dass** die ersten und zweiten Emissionsmittel (6, 9) eine Vielzahl der Emissionsgeräte (11) aufweisen.

4. Gerät (1) nach einem oder mehreren der vorhergehenden Ansprüche,
**dadurch gekennzeichnet, dass** die Emissionsgeräte (11) der ersten Arbeitseinheit (5) entlang mindestens einer ersten Reihe (F1) angeordnet sind und dadurch, dass die Emissionsgeräte (11) der zweiten Arbeitseinheit (7) entlang mindestens einer zweiten Reihe (F2) angeordnet sind, wobei die erste Reihe (F1) und die zweite Reihe (F2) im Wesentlichen parallel und in Bezug auf den Strahlungsbereich (4) zueinander entgegengesetzt sind.

5. Gerät (1) nach einem oder mehreren der vorhergehenden Ansprüche,
**dadurch gekennzeichnet, dass** sowohl die erste Arbeitseinheit (5) als auch die zweite Arbeitseinheit (7) je ein Gehäuseabteil (12) der Emissionsgeräte (11) aufweisen.

6. Gerät (1) nach einem oder mehreren der vorhergehenden Ansprüche,
**dadurch gekennzeichnet, dass** sowohl die ersten Reflexionsmittel (8) als auch die zweiten Reflexionsmittel (10) eine erste Reflexionswand (13) aufweisen, die dazu angepasst ist, die Mikrowellen zu dem Strahlungsbereich (4) zu reflektieren.

7. Gerät (1) nach Anspruch 6, **dadurch gekennzeichnet, dass** die ersten Reflexionswände (13) im Wesentlichen parallel und einander zugewandt sind, um den Strahlungsbereich (4) zumindest teilweise abzugrenzen.

8. Gerät (1) nach einem oder mehreren der vorhergehenden Ansprüche 6 oder 7, **dadurch gekennzeichnet, dass** sowohl die ersten Reflexionsmittel (8) als auch die zweiten Reflexionsmittel (10) mindestens eine zweite Reflexionswand (14) aufweisen, die im Gebrauch über dem Strahlungsbereich (4) und im Wesentlichen senkrecht zu den ersten Reflexionswänden (13) positioniert ist.

9. Gerät (1) nach einem oder mehreren der vorhergehenden Ansprüche 6 bis 8, **dadurch gekennzeichnet, dass** die ersten Reflexionswände (13) mit mindestens einer Ausgangsöffnung (15) der Mikrowellen versehen sind, die dem Strahlungsbereich (4) zugewandt ist und dazu angepasst ist, die Bewegung der Mikrowellen von dem Gehäuseabteil (12) zu dem Strahlungsbereich (4) zu erlauben.

10. Gerät (1) nach einem oder mehreren der vorhergehenden Ansprüche 6 bis 9, **dadurch gekennzeichnet, dass** die erste Arbeitseinheit (5) und die zweite Arbeitseinheit (7) Zuführmittel (16) der Mikrowellen aufweisen, die zwischen den Emissionsgeräten (11) und den Reflexionswänden (13) positioniert sind und dazu angepasst sind, die Mikrowellen zu der Ausgangsöffnung (15) zu führen.

11. Gerät (1) nach einem oder mehreren der vorhergehenden Ansprüche,
**dadurch gekennzeichnet, dass** sowohl die erste Arbeitseinheit (5) als auch die zweite Arbeitseinheit (7) eine Heizbaugruppe (18) des Strahlungsbereiches (4) aufweisen, die dazu angepasst ist, mindestens einen Heißluftstrom zu dem Strahlungsbereich (4) zu führen, wobei der Heißluftstrom dazu angepasst ist, den Strahlungsbereich (4) zu heizen.

12. Gerät (1) nach Anspruch 11, **dadurch gekennzeichnet, dass** die Heizbaugruppe (18) aufweist:
- Erzeugungsmittel (19, 20) des Heißluftstrom;
- Ausrichtmittel (21), die dazu angepasst sind, den Heißluftstrom der Erzeugungsmittel (19, 20) zu dem Strahlungsbereich (4) zu führen.

13. Gerät (1) nach Anspruch 12, **dadurch gekennzeichnet, dass** die Erzeugungsmittel (19, 20) aufweisen
- mindestens ein Ventilationsgerät (19), das dazu angepasst ist, mindestens einen Luftstrom zu bewegen;
- Anpassungsmittel (20), die dazu angepasst sind, den Luftstrom des Ventilationsgerätes zu dem Strahlungsgerät (11) zu führen;
wobei der Luftstrom dazu angepasst ist, die Emissionsgeräte (11) durch Wärmeaustausch zu kühlen und sich zu erhitzen, um so den Heißluftstrom zu erzeugen.

14. Gerät (1) nach einem oder mehreren der vorhergehenden Ansprüche 12 oder 13, **dadurch gekennzeichnet, dass** die Erzeugungsmittel (19, 20) Filtermittel aufweisen, die mit dem Ventilationsmittel (19) verbunden sind, und dazu angepasst sind, den in die Ventilationsmittel (19) eintretenden Luftstrom zu filtern.

15. Gerät (1) nach einem oder mehreren der vorhergehenden Ansprüche,
**dadurch gekennzeichnet, dass** der Stützrahmen (2) Abstandseinstellmittel (22) aufweist, die dazu angepasst sind, den Abstand zwischen der ersten Arbeitseinheit (5) und der zweiten Arbeitseinheit (7) anzupassen.

16. Gerät (1) nach einem oder mehreren der vorhergehenden Ansprüche,
**dadurch gekennzeichnet, dass** der Stützrahmen (2) Befestigungsmittel (26) aufweist, die dazu angepasst sind, mit Schleppmitteln (T) des Geräts (1) verbunden zu werden.

## Revendications

1. Équipement (1) pour le désherbage de sols comprenant :
- au moins un cadre de support (2) ;
- au moins un ensemble de rayonnement (3) associé audit cadre de support (2), adapté pour générer des micro-ondes et pour les transporter vers une zone de rayonnement (4) ;
dans lequel ledit ensemble de rayonnement (3) comprend :
- au moins une première unité de travail (5) pourvue de premiers moyens d'émission (6) adaptés pour émettre lesdites micro-ondes ; et
- au moins une seconde unité de travail (7) munie de premiers moyens de réflexion (8) adaptés pour réfléchir lesdites micro-ondes émises par lesdits premiers moyens d'émission (6) vers ladite zone de rayonnement (4) ; et
dans lequel lesdites première et seconde unités de travail (5, 7) sont sensiblement opposées l'une à l'autre par rapport à ladite zone de rayonnement (4), **caractérisé par le fait que** ladite seconde unité de travail (7) comprend des seconds moyens d'émission (9) desdites micro-ondes et **par le fait que** ladite première unité de travail (5) comprend des seconds moyens de réflexion (10) adaptés pour réfléchir lesdites micro-ondes émises par lesdits seconds moyens d'émission (9) vers ladite zone de rayonnement (4).

2. Équipement (1) selon la revendication 1, **caractérisé par le fait que** chacun desdits premier et second moyens d'émission (6, 9) comprend au moins un dispositif d'émission (11) desdites micro-ondes.

3. Équipement (1) selon une ou plusieurs des revendications précédentes, **caractérisé par le fait que** lesdits premier et second moyens d'émission (6, 9) comprennent une pluralité desdits dispositifs d'émission (11).

4. Équipement (1) selon une ou plusieurs des revendications précédentes, **caractérisé par le fait que** lesdits dispositifs d'émission (11) de ladite première unité de travail (5) sont disposé le long d'au moins une première rangée (F1) et **par le fait que** lesdits dispositifs d'émission (11) de ladite seconde unité de travail (7) sont disposés le long d'au moins une seconde rangée (F2), ladite première rangée (F1) et ladite seconde rangée (F2) étant sensiblement parallèles et opposées par rapport à ladite zone de rayonnement (4).

5. Équipement (1) selon une ou plusieurs des revendications précédentes, **caractérisé par le fait que** chacune de ladite première unité de travail (5) et de ladite seconde unité de travail (7) comprend un compartiment de logement (12) desdits dispositifs d'émission (11).

6. Équipement (1) selon une ou plusieurs des revendications précédentes, **caractérisé par le fait que** chacun desdits premiers moyens de réflexion (8) et desdits seconds moyens de réflexion (10) comprend une première paroi de réflexion (13) adaptée pour réfléchir lesdites micro-ondes vers ladite zone de rayonnement (4).

7. Équipement (1) selon la revendication 6, **caractérisé par le fait que** lesdites premières parois de réflexion (13) sont sensiblement parallèles et se font mutuellement face pour délimiter, au moins partiellement, ladite zone de rayonnement (4).

8. Équipement (1) selon une ou plusieurs des revendications précédentes 6 ou 7, **caractérisé par le fait que** chacun desdits premiers moyens de réflexion (8) et desdits seconds moyens de réflexion (10) comprend au moins une seconde paroi de réflexion (14) positionnée, en utilisation, au-dessus de ladite zone de rayonnement (4) et sensiblement perpendiculaire auxdites premières parois de réflexion (13).

9. Équipement (1) selon une ou plusieurs des revendications précédentes 6 à 8, **caractérisé par le fait que** lesdites premières parois de réflexion (13) sont munies d'au moins une ouverture de sortie (15) desdites micro-ondes, faisant face à ladite zone de rayonnement (4) et adaptée pour permettre le déplacement desdites micro-ondes desdits compartiments de logement (12) vers ladite zone de rayonnement (4).

10. Équipement (1) selon une ou plusieurs des revendications précédentes 6 à 9, **caractérisé par le fait que** ladite première unité de travail (5) et ladite seconde unité de travail (7) comprennent des moyens de transport (16) desdites micro-ondes positionnés entre lesdits dispositifs d'émission (11) et lesdites premières parois de réflexion (13) et adaptés pour transporter lesdites micro-ondes vers ladite ouverture de sortie (15).

11. Équipement (1) selon une ou plusieurs des revendications précédentes, **caractérisé par le fait que** chacune de ladite première unité de travail (5) et de ladite seconde unité de travail (7) comprend un ensemble de chauffage (18) de ladite zone de rayonnement (4) adapté pour transporter au moins un flux d'air chaud vers ladite zone de rayonnement (4), ledit flux d'air chaud étant adapté pour chauffer ladite zone de rayonnement (4).

12. Équipement (1) selon la revendication 11, **caractérisé en ce que** ledit ensemble de chauffage (18) comprend :
- des moyens de génération (19, 20) dudit écoulement d'air chaud ;
- des moyens directionnels (21) adaptés pour transporter ledit flux d'air chaud desdits moyens de génération (19, 20) vers ladite zone de rayonnement (4).

13. Équipement (1) selon la revendication 12, **caractérisé en ce que** lesdits moyens de génération (19, 20) comprennent :
- au moins un dispositif de ventilation (19) adapté pour déplacer au moins un flux d'air ;
- des moyens de montage (20) adaptés pour transporter ledit flux d'air depuis ledit dispositif de ventilation jusqu'auxdits dispositifs d'émission (11) ;
dans lequel ledit flux d'air est adapté pour refroidir lesdits dispositifs d'émission (11) par échange de chaleur et pour chauffer, générant ainsi ledit flux d'air chaud.

14. Équipement (1) selon une ou plusieurs des revendications précédentes 12 ou 13, **caractérisé par le fait que** lesdits moyens de génération (19, 20) comprennent des moyens de filtrage associés audit dispositif de ventilation (19) et adaptés pour filtrer ledit flux d'air entrant dans ledit dispositif de ventilation (19).

15. Équipement (1) selon une ou plusieurs des revendications précédentes, **caractérisé par le fait que** ledit cadre de support (2) comprend des moyens de réglage de distance (22) adaptés pour régler la distance entre ladite première unité de travail (5) et ladite seconde unité de travail (7).

16. Équipement (1) selon une ou plusieurs des revendications précédentes, **caractérisé par le fait que** ledit cadre de support (2) comprend des moyens de fixation (26) adaptés pour être associés à des moyens de remorquage (T) dudit équipement (1).
